**Europäisches Patentamt**

**European Patent Office**

**Office européen des brevets**

(19)

(11) Publication number: **0 001 015**
**A1**

# EUROPEAN PATENT APPLICATION

(12)

(21) Application number: **78300319.7**

(22) Date of filing: **24.08.78**

(51) Int. Cl.²: **B 65 B 51/14**

(30) Priority: **29.08.77 US 828587**

(43) Date of publication of application: **07.03.79**
**Bulletin 79/5**

(84) Designated Contracting States: **BE DE FR GB NL**

(71) Applicant: **STAUFFER CHEMICAL COMPANY,**
**Westport Connecticut 06880 (US)**

(72) Inventor: **Leubner, Harry Herbert, 5113 Randolph Road,**
**North Little Rock Arkansas 72116 (US)**

(74) Representative: **Boon, Graham Anthony, Elkington and**
**Fife High Holborn House 52/54 High Holborn, London,**
**WC1V 6SH (GB)**

(54) **Automatic bag sealing apparatus.**

(57) The automatic bag sealing apparatus according to the present invention is utilized for sealing a valve sleeve 10 of a filled valved bag 12. The apparatus is used to seal together interior valve sleeve surfaces 22 having applied thereto a sealant 24. The automatic bag sealing apparatus is comprised of a sealing clamp means 38 adapted to clampingly engage the valve sleeve to seal the interior valve sleeve surfaces. The apparatus is further comprised of a means for opening and closing the clamp means. A conveyor means 27 is provided which is adapted to convey the bag with the valve sleeve in the vertical position, toward and away from the clamp means. A bag positioning means is also provided which is adapted to position the bag so that the valve sleeve is inserted in the open clamp means while the bag is being conveyed toward the clamp means. A cycle control means is provided for:

    (a) stopping conveyance of the bag when the valve sleeve is inserted in the open clamp means;

    (b) effecting closure of the clamp means with the valve sleeve to seal the interior valve sleeve surfaces together;

    (c) effecting opening of the clamp means; and

    (d) starting conveyance of the sealed bag away from the clamp means.

- 1 -

AUTOMATIC BAG SEALING APPARATUS

This invention relates to an automatic bag sealing apparatus; more particularly it relates to an apparatus for sealing a valve of a filled valve bag.

Valved bags and the use thereof are well known in the art, see, for example U.S. Patent Nos. 2,996,858 and 2,613,022 and U.S. Defensive Publication T 941,002. As may be seen from these references, various methods and apparatus are known for filling and sealing valved bags.

A typical valved bag is enclosed at the top, the bottom and on all sides, except for a flexible valve sleeve that extends parallel to and along the bag top. A filling spout is usually inserted into the valve during filling of the bag. The flexible valve sleeve defines a mouth which opens to and extends beyond one corner of the bag top. Applied to the interior valve sleeve surfaces is a sealing composition which is usually a pressure-sensitive, heat-sensitive or heat-activated composition.

The valved bags may be made of, for example, paper, treated paper or plastic, and may be composed of one or more layers or plies.

A spout is inserted in the valve sleeve to fill the bag, usually with a pulverent type material. The valve sleeve may be adapted to partially collapse by the action of the material which fills the bag, thereby effecting a partial closure of the valve sleeve. This closure may be more or less automatic in its effect, for example, in a bag which is composed of one or more layers or plies of flexible paper the valve sleeve is easily collapsible and is flattened in response to the filling of the bag.

After the bag has been filled and sealed, the valve sleeve is tucked into the bag to effect a supplemental type closure and to enhance the appearance of the filled bag.

Typically an automatic filling apparatus is utilized to fill the bags. The bag is then conveyed automatically from the bag filling station to a sealing station.

A typical apparatus would include a weighing arrangement by which the quantity of material fed to a bag is automatically controlled.

As may be seen from, for example, U.S. Patent No. 2,613,022 and 2,996,858, the sealing apparatus is usually complex and involves a multiplicity of manipulations of the valved bag to place the valve sleeve in proper position for sealing. Some of the prior art devices, see, for example, U.S. Patent No. 2,996,858, perform the sealing operation with the valve sleeve in the horizontal position. Sealing in this manner may cause leakage and improper sealing of the valve sleeve due to the contents of the bag remaining in a portion of the valve sleeve.

Attempts have been made to seal the valve sleeve in other than the horizontal position, see, for example, U.S. Patent No. 2,613,022 and U.S. Defensive Publication T 941,002. Such attempts have resulted in apparatus which are complex in structure and require a multiplicity of manipulations of the valved bag in order to accomplish proper sealing.

- 3 -                                              0001015

According to the present invention, an apparatus is provided for sealing the valve sleeve of a filled valved bag which eliminates the above-mentioned difficulties.

It is an object of the present invention to provide an apparatus for sealing a valve sleeve of a filled valved bag without the complicated manipulation of the bag.

It is another object of the present invention to provide an apparatus for sealing a valve sleeve of a filled valve bag while the valve sleeve is in the vertical position, thus minimizing leakage.

It is a further object of the present invention to provide an automatic bag sealing apparatus which automatically heat seals the valve sleeve of the filled valved bag.

The present invention provides an automatic bag sealing apparatus for sealing a valve sleeve of a filled valved bag, the interior valve sleeve surfaces of which having applied thereto a sealant, characterised in that the apparatus comprises:

    (a)   a sealing clamp means for clampingly engaging the valve sleeve to seal the interior valve sleeve surfaces;

    (b)   a means for opening and closing the clamp means;

    (c)   a conveyor means adapted to convey the bag, with the valve sleeve in a vertical position, toward and away from the clamp means;

    (d)   a bag positioning means adapted to position the bag so that the valve sleeve is inserted in the open clamp means while the bag is being conveyed toward the clamp means;

and (e)   a cycle control means which provides for stopping conveyance of the bag when the valve sleeve is inserted in the open clamp means effecting closure of the clamp means to seal the interior valve sleeve surfaces together, effecting opening of the clamp means and starting conveyance of the sealed bag away from the clamp means.

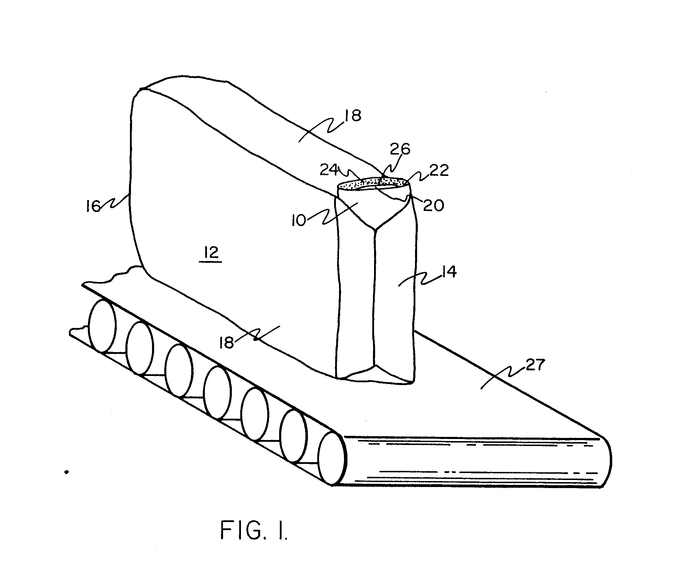

Referring to the accompanying drawings, Figure 1 is a perspective view of a typical valved bag positioned to be sealed by the bag sealing apparatus according to the present invention;

Figure 2 is a side elevational view of one embodiment of the present bag sealing apparatus;

Figure 3 is a plan view of the present bag sealing apparatus shown in Figure 2;

Figure 4 is a side elevational view of another embodiment of the present bag sealing apparatus with the sealing clamp in the closed position sealing a valved bag (indicated by the solid lines) and in the open position (indicated by the dashed lines);

Figure 5 is a side elevational view of the embodiment depicted in Figure 4 with the sealing clamp in the open and raised position just after sealing of the valved bag;

Figure 6 is an enlarged fragmentary vertical view of the sealing clamp;

Figure 7 is a sectional view of the sealing clamp shown in Figure 6 taken along section line 7-7 of Figure 6;

Figure 8 is a schematic diagram of a cycle control means which may be utilized for automatically operating the bag sealing apparatus illustrated in Figures 4 and 5;

Referring to Figure 1, the present automatic

0001015

bag sealing apparatus is designed for sealing a valve sleeve 10 of a filled valved bag 12.

A typical valved bag 12 for use in conjunction with the apparatus according to the present invention is enclosed at the top 14 the bottom 16 and on all sides 18, except for a flexible valve sleeve 10 that extends parallel to and along the bag top 14 and into which a filling spout (not shown) may be inserted. The flexible valve sleeve 10 defines a mouth 20 which opens to and extends beyond one corner of the bag top 14.

In the preferred type of bag, the valve sleeve 10 is adapted to partially collapse by the action of the material which fills the bag 12, thereby effecting a partial closure of the valve sleeve 10 to produce a valve sleeve 10 which is substantially flat in a plane substantially perpendicular to the sides 18 of the bag 12.

The automatic bag sealing apparatus according to the present invention seals the interior valve sleeve surfaces 22 together.

The valved bag 12 may be made of, for example, paper, treated paper or plastic, and may be composed of one or more layers or plies. The construction of such bags is well known in the art.

Applied to the interior valve sleeve surfaces 22 is a sealing component or composition 24. The sealant 24 is applied to the interior valve sleeve surfaces 22, for example, adjacent to the margin of the lip of sleeve 26.

The sealing composition 24 should be adapted to adhere to the bag material and also to form a bond with itself. It is desirable for the sealing composition 24 to be of such a type that it need not be held pressed together for an appreciable period of time in order to effect a bond. In other words, it is desirable that pressure need be applied for only a short period of time, such as a few seconds, and thereafter released without detriment to the formation of the bond. A suitable sealing composition 24 may be a heat-sensitive or heat-activated composition, such as a thermosetting or thermoplastic composition, for example polyethylene. The sealing composition applied to the valve sleeve surfaces 22 may also be a pressure-sensitive or contact-sealing composition, wherein the mere pressing together of the valve sleeve surfaces 22 seals the valve sleeve 10. However, since it is at times difficult to prevent contact of the material used to fill the bags with the interior valve sleeve surfaces 22 during the filling operation, it is preferred to utilize sealing compositions which are not sticky or tacky. Preferably, a heat-sensitive or heat-activated sealing composition is used.

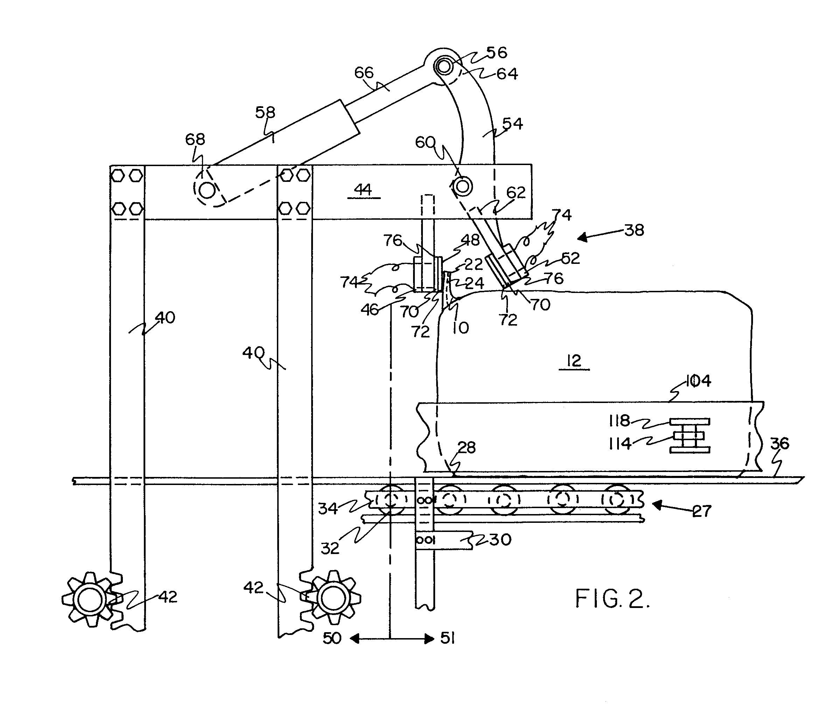

Figure 2 illustrates a specific embodiment of the present automatic bag sealing apparatus. A conveyor means 27 is provided for conveying the bag 12 with the valve sleeve 10 in the vertical position toward and away from a sealing clamp means 28. Specifically, a conveyor section 28 is mounted upon a framework 30. The conveyor section 28 includes a plurality of rollers 32 which are mounted in side frame members 34. The rollers 32 are journaled in bearings and are freely rotatable. On top of the rollers 32 is a conveyor belt 36 for conveying the valved bags 12 from the loading station (not shown) toward the clamp means 38. The conveyor section 28 has a downstream side 50 and an upstream side 51 with respect to the clamp means 38.

A support frame 40 straddles the conveyor section 28. The frame 40 is adjustable in height, for example, by a rack and pinion arrangement 42, to allow for the adjustment of the apparatus to accommodate different size valved bags.

Mounted to a horizontal frame member 44 is the sealing clamp means 38. The clamp means 28 is adapted to clampingly engage the valve sleeve 10 to seal the interior valve sleeve surfaces 22.

By the use of the term "clampingly engage the valve sleeve", it is meant that the clamp means 38, which includes two surfaces for engaging and applying pressure to each side of the flattened valve sleeve 10 contacts the valve sleeve and urges the interior surfaces into sealing contact.

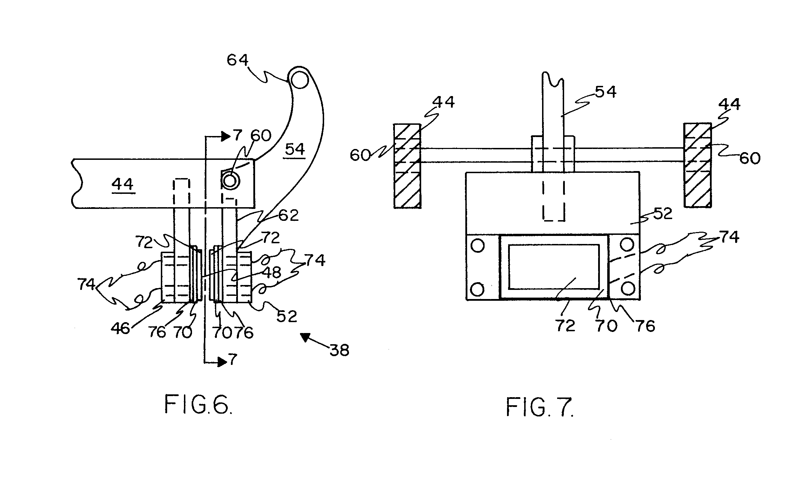

As shown more clearly in the embodiment of clamp means 38 illustrated in Figures 6 and 7, the clamp means 38 consists of a static anvil 46 having a vertical pressure face 48. The static anvil 46 is mounted to the horizontal frame member 44. The vertical pressure face 48 is facing toward the upstream side 51 of the conveyor section 28 and is positioned so that, when a filled bag 12 is conveyed toward the vertical pressure face 48, the flattened valve sleeve 10 substantially engages the vertical pressure face 48 with the plane of the flattened valve sleeve 10 substantially parallel to the plane of the vertical pressure face 48. Preferably, the vertical pressure face 48 is substantially centered along the width of the conveyor section 28.

On the upstream side 51 of the static anvil 46, is a pressing anvil 52 which is adapted to cooperate with the static anvil 46 in clamping relation therewith. As shown in Figure 2, the pressing anvil 52 is connected to one end 62 of a pressing arm 54. The other end 64 of the pressing arm 54 is pivotally connected at 56 to the piston rod 66 of a pneumatic cylinder 58. The pressing arm 54 is also pivotally connected at 60 to the horizontal frame member 44 between the two ends 62 and 64 of the pressing arm 54. The cylinder end 68 of the pneumatic cylinder 58 is also pivotally mounted to horizontal frame member 44.

Thus, in order to open clamp means 38 the piston rod 66 is pneumatically retracted into the cylinder 58, pivoting the pressing arm 54 about its pivotal connection 60 and raising the pressing anvil 52 to a sufficient height to permit the valve sleeve 10 to substantially engage the vertical pressure face 48 without obstruction.

In order to clamp the pressing anvil 52 against the static anvil 46, the piston rod 66 is pneumatically extended from the cylinder 58 and the movement of the elements reversed.

If a heat-activated or heat-sensitive sealing composition 24 is utilized on the interior valve sleeve surfaces 22, a suitable means is required for applying heat to the valve sleeve 10. Preferably, this is accomplished by a means for heating the clamp means 38 to sensitize or activate the heat sensitive or heat-activated sealing composition 24.

In the embodiments illustrated in Figures 6 and 7, electrical resistance heating elements 70 are secured to the pressing anvil 52 and static anvil 46 to heat the pressure faces 72 and 48 to a temperature sufficient to sensitize or activate the heat-sensitive or heat-activated sealing composition. Each heating element 70 is connected to a suitable source of electrical energy (not shown) by means of electrical leads 74. A thermoswitch (not shown) may be interposed in one of the leads 74 to maintain a predetermined uniform temperature in the heating element 70. It has been found that maintaining a temperature of from about 175 to about 250°C is sufficient to seal a valve sleeve 10 having a sealing composition 24 which consists of a polyethylene coating. The temperature of the pressure faces 72 and 48 are maintained in a range to seal effectively the valve sleeve 10 without undue damage to the material of which the valve sleeve 10 is constructed. When a pressure-sensitive or contact-adhesive is used as a sealing composition 24 it is not necessary to maintain an elevated temperature in the pressure faces 72 and 48.

Preferably, an insulating pad 76 is installed behind and around the heating element 70 to allow for maximum heat transmission to the valve sleeve 10.

It is, of course, possible to employ a pressure-sensitive adhesive which does not require heat for sealing the valve sleeve. In such cases, the heating element 70 may be dispensed with and only the application of pressure used for sealing.

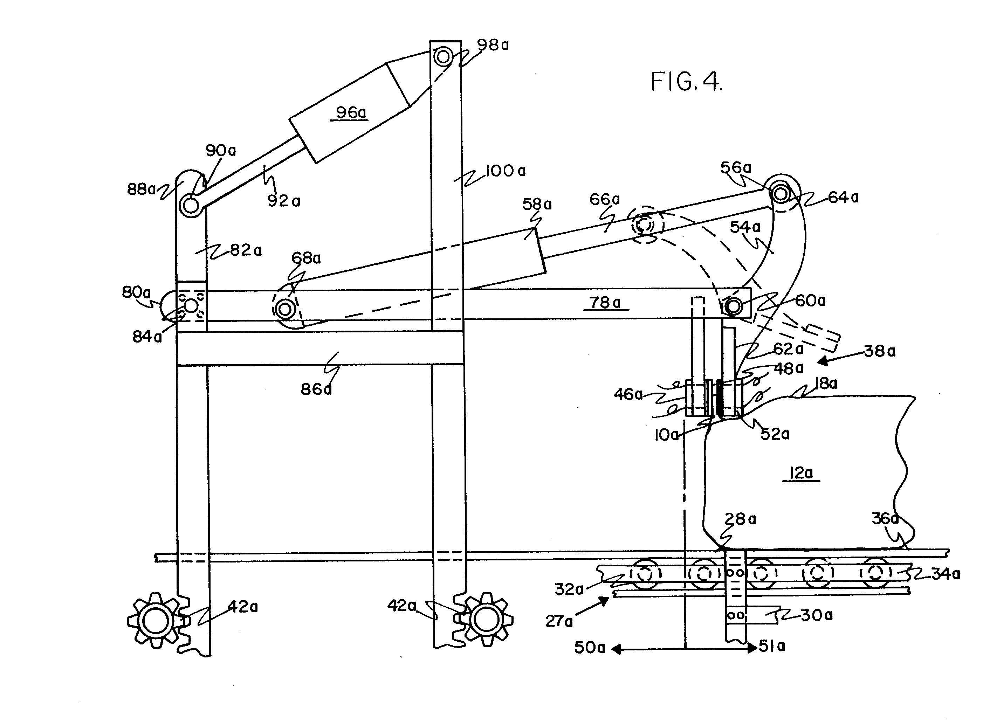

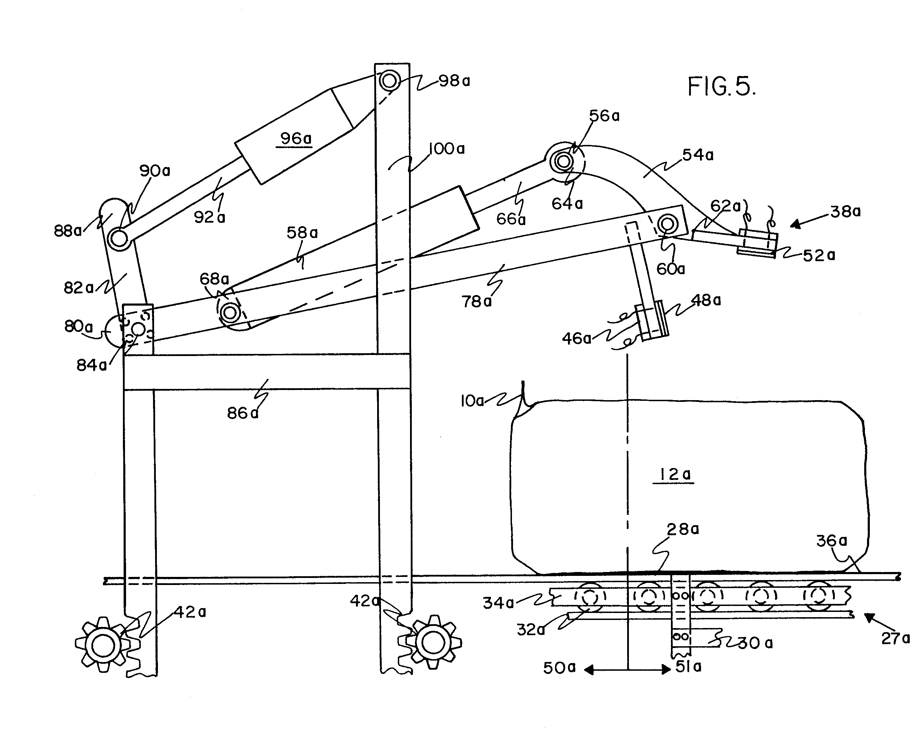

Figures 4 and 5 illustrate another embodiment of the present bag sealing apparatus. This embodiment comprises a means for raising the clamp means 38a from the initial sealing position, as depicted in Figure 4, to allow for unobstructed conveyance of the bag 12a away from the clamp means 38a after sealing, and a means for lowering the clamp means 38a to the initial sealing position after conveyance of the bag 12a away from the clamp means 38a. This embodiment is particularly useful when the valve sleeve 10a does not project above the side 18a of the bag 12a.

In this embodiment, the sealing clamp means 38a is mounted to a pivotal frame member 78a.

The clamp means 38a is substantially the same as the clamp means illustrated in Figure 2. The clamp means 38a comprises a static anvil 46a having a vertical pressure face 48a. The static anvil 46a is mounted to the pivotal frame member 78a. The vertical pressure face 48a is facing toward the upstream side 51a of the conveyor section 28a and is positioned so that when a bag 12a is conveyed toward the vertical pressure face 48a the flattened valve sleeve 10a substantially engages the vertical pressure face 48a with the plane of the flattened valve sleeve 10a substantially parallel to the plane of the vertical pressure face 48a. Preferably, the vertical pressure face 48a is substantially centered along the width of the conveyor section 28a.

On the upstream side 51a of the static anvil 46a, is a pressing anvil 52a which is adapted to cooperate with the static anvil 46a in clamping relation therewith. The pressing anvil 52a is connected to one end 62a of a pressing arm 54a. The other end 64a of the pressing arm 54a is pivotally connected at 56a to the piston rod 66a of a pneumatic cylinder 58a. The pressing arm 54a is also pivotally connected at 60a to the pivotal frame member 78a between the two ends 62a and 64a of the pressing arm 54a. The end 68a of the pneumatic cylinder 58a is also pivotally mounted to the pivotal frame member 78a.

Thus, in order to open clamp means 38a, the piston rod 66a is pneumatically retracted into the cylinder 58a, pivoting the pressing arm 54a about its pivotal connection 60a and raising the pressing anvil 52a to a sufficient height to permit the valve sleeve 10a to substantially engage the vertical pressure face 48a without obstruction (Figure 4 dashed lines).

In order to clamp the pressing anvil 52a against the static anvil 46a, the piston rod 66a is pneumatically extended from the cylinder 58a and the movement of the elements reversed (Figure 4 solid lines).

At the other end 80a of the pivotal frame member 78a, a rod 82a is mounted to the pivotal frame member 78a substantially perpendicular thereto.

Attached to the pivotal frame member 78a at end 80a is a pivot pin 84a supported by horizontal frame member 86a. The other end 88a of rod 82a is pivotally connected at 90a to the piston rods 92a of a second pneumatic cylinder 96a. The cylinder end 98a of the second pneumatic cylinder 96a is pivotally mounted to a vertical frame member 100a.

Thus, in order to raise the clamp means 38a from the initial sealing position, to allow for the unobstructed conveyance of the bag 12a away from the clamp means 38a after sealing, the clamp means 38a is opened and the piston rod 92a pneumatically extended from the cylinder 96a, pivoting the rod 82a and pivotal frame member 78a about pivot pin 84a thus raising the clamp means 38a (Figure 5). To lower the clamp means 38a the piston rod 92a is retracted into the cylinder 96a and the movement of the elements reversed (Figure 6).

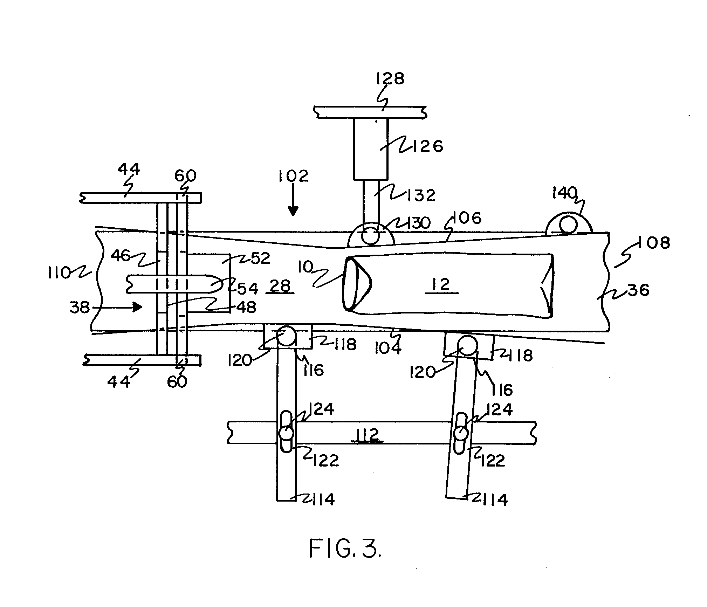

Referring to Figure 3, the automatic bag sealing apparatus according to the present invention is further comprised of a bag positioning means, generally designated as 102, adapted to position the bag 12 so that the flattened valve sleeve 10 is inserted in the open clamp means 38 substantially engaging the vertical pressure face 48 of the static anvil 46 with the plane of the flattened valve sleeve 10 substantially parallel to the plane of the vertical pressure face 48 while the bag is being conveyed toward the clamp means 38.

Preferably, the bag positioning means consists of positioning plates 104 and 106 along each side of the conveyor section 28 and upstream 51 of clamp means 38. The positioning plates 104 and 106 define an entrance 108 and exit 110 to the bag positioning means 102. The positioning plates 104 and 106 are positioned in such a manner that when the bag 12 is conveyed by the conveyor belt 36 through the entrance 108 of the
positioning means 102 the bag 12 is directed toward the
proper clamping position; that is, the flattened valve
sleeve 10 substantially engages the vertical pressure
face 48 with the plane of the flattened valve sleeve
10 substantially parallel to the plane of the vertical
pressure face 48.

It is highly preferred that the positioning
means 102 comprise a stationary positioning plate
104, which is adjustably mounted to a horizontal frame
member 112. The stationary positioning plate 104
is positioned substantially parallel to and along one
side of the conveyor section 28. The stationary
positioning plate 104 is mounted to the frame member
112 by slotted rods 114 which are each fixedly attached
at one end 116 to the positioning plate 104 by angle
bracket 118 and nut and bolt 120. The other end 122
of each of the slotted rods 114 is adjustably mounted
to the frame member 112 by a nut and bolt 124 passing
through the slot of rod 114 and frame member 112.
It is desirable to have a means for adjusting the
position of the positioning plate 104 to accommodate
various types and sizes of valved bags.

Along the opposite side of the conveyor
section 28 is a pivotally mounted positioning plate 106,
pivotally mounted at the entrance 108 of the positioning
means 102 by a pivot mount 140 and having attached to
the positioning plate 106 a means for pivoting plate
106. The particular embodiment illustrated in Figure
3 utilizes a pneumatic cylinder 126 as a means for
pivoting plate 106. The pneumatic cylinder 126 is
mounted to a frame member 128 at one end and pivotally
mounted by a pivot mount 130 to the positioning plate
106 at the other end. Activation of the pneumatic
cylinder 126 to extend or retract the piston rod 132 of the cylinder 126 adjusts the position of the
positioning plate 106 to urge variously placed bags
12 toward the proper clamping position.  Thus, the
distance between the positioning plates 104 and 106 is
a fixed distance at the entrance 108 about equal to
the width of the conveyor belt 36 and adjustable at all
other positions between the exit 110 and entrance 108.

In one embodiment of the present invention, the
positioning plate 106 may be activated by the pneumatic
cylinder 126 also to clamp the bag into proper clamping
position and thus stop conveyance of the bag 12,
while the conveyor section 28 remains in operation
during the sealing process.

Thus, as may be appreciated, a filled bag
may be conveyed by the conveyor section 28 to a clamp
means 38 for sealing without a multiplicity of
manipulations of the bag 12.  The bag is not, for
example, turned or tilted, but remains substantially in
the position in which it is placed on the conveyor.

The present bag sealing apparatus is further
provided with a cycle control means.  The cycle control
means is for:

(a)  stopping conveyance of the bag 12 when
     the valve sleeve 10 is inserted in the
     open clamp means 38;

(b)  effecting closure of the clamp means 38
     to seal the interior valve sleeve
     surfaces 22 together;

(c)  effecting opening of the clamp means 38;
     and

(d)  starting conveyance of the sealed bag 12
     away from the clamp means 38.

Stopping conveyance of the bag 12 may be
effected by stopping the conveyor section 28, or
holding the bag 12 in a stationary position by a holding means, for example, as mentioned above, by using positioning plates 104 and 106 to clamp bag 12 while the conveyor belt 36 passes underneath the bag 12. In the illustrated embodiments, the conveyor belt 36 is stopped when the valve sleeve 10 is inserted in the open clamp means 38.

The cycle control means, simultaneously or after stopping conveyance of the bag 12, effects closure of the clamp means 38, for example as illustrated in Figures 2 and 4, by activating the pneumatic cylinder 58/58a to extend the piston rod 66/66a against the pressing arm 54/54a to drive the pressing anvil 52/52a into clamping relation with the static anvil 46/46a. The clamp means 38/38a remains closed for a sufficient time to seal the interior valve sleeve surfaces 22. More specifically, when utilizing polyethylene as the heat-sensitive sealing composition 24 on the interior surfaces of the valve sleeve 22, sealing may be accomplished in from 3 to 5 seconds when the electrical resistance heating element 70 in the anvils 52 and 46 are heated to from about 175 to about 250°C. The time and temperature utilized for sealing are dependent on the material of which the bag is constructed and upon the type of sealing composition utilized.

The cycle control means subsequently effects the opening of the clamp means 38, for example by activating pneumatic cylinder 58/58a to retract piston rod 66/66a.

Simultaneous to or subsequent to effecting the opening of the clamp means 38, the cycle control means starts conveyance of the sealed bag 12 away from the clamp means 38.

When the embodiment of the positioning means illustrated in Figure 3 is utilized, the cycle controls means additionally provides for effecting the pivoting of the positioning plate 106 to position the bag so that the valve sleeve is inserted in the clamp means prior to effecting closure of the clamp means 38.

One particular embodiment of the present invention illustrated in Figures 4 and 5, includes a means for raising the clamp means 38a from an initial sealing position to allow for unobstructed conveyance of the sealed bag 12a away from the clamp means 38a and a means for lowering the clamp means to the initial sealing position after conveyance of the bag 12a away from the clamp means 38a. When this particular embodiment of the present invention is utilized, it is highly desirable for the cycle control means to additionally provide for:

>  (a)  effecting raising of the clamp means 38a after effecting opening the clamp means 38a; and
>  (b)  effecting lowering of the clamp means 38a after conveyance of the sealed bag 12a away from the clamp means and prior to stopping conveyance of another bag.

For example, in the embodiment illustrated in Figures 4 and 5, after the clamp means 38a is opened, the cycle control means activates the pneumatic cylinder 96a to raise the clamp means 38a. After a predetermined period of time i.e. about the length of time it takes for the sealed bag 12a to pass the clamp means 38a, the cycle control means activates the pneumatic cylinder 96a to lower the clamp means 38a to its initial sealing position.

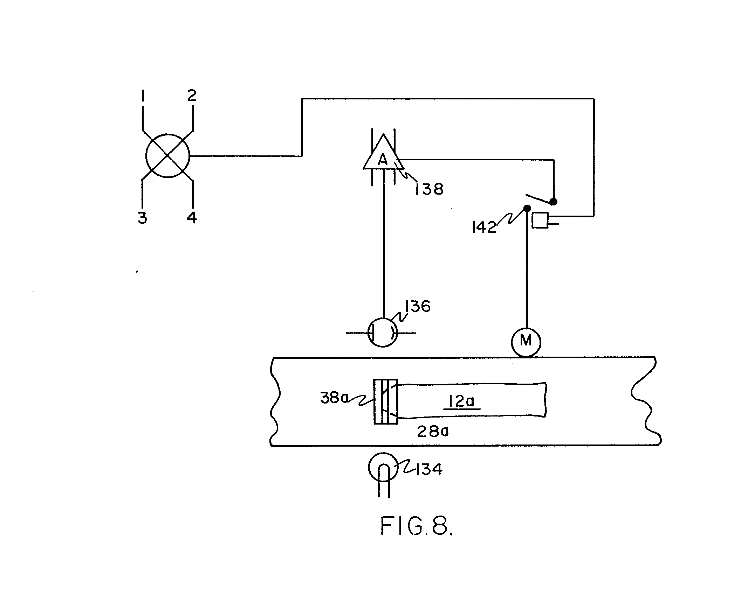

One embodiment of the cycle control means is illustrated in Figure 8, which is a schematic diagram of the cycle control means utilized for automatically operating the bag sealing apparatus illustrated in Figures 4 and 5.

In the embodiment illustrated in Figure 8, the cycle control means is automatically activated through a cycle by a photocell control circuit. Generally, a light source 134 may be mounted in any suitable manner on one side of the conveyor section 28a so that the light beam therefrom will be blocked by a bag 12a passing in front of the light source 134 along the conveyor section 28a. A photocell 136 is mounted on the opposite side of the conveyor section 28a so that the photocell 136 will be in the path of light from the light source when the conveyor section 28a does not have a bag 12a passing in front of the light source 134. When the valve sleeve is inserted in the open clamp means 38a the bag 12a passes in front of the light source 134 and the light beam emitted therefrom is interrupted. This interruption of the light beam affects a sudden change in the output of the photocell 136 which change is amplified by an amplifier 138 to produce a signal which starts the cycle of activation of the elements.

The amplified signal then activates an electrical switch 142, which is normally in the on position, to the off position, to stop the conveyor section 28a for a predetermined period of time. This may be effectively accomplished by the use of a time delay relay of the type sold by Allen Bradley and designated "700 NT Pneumatic Timing Unit". The time delay relay unit also activates a four-way pneumatic valve for:

1.  extending piston rod 66a from pneumatic cylinder 58a to close clamp means 38a; and then

2.  retracting piston rod 66a into pneumatic cylinder 58a to open clamp means 38a;

3. extending piston rod 92a from pneumatic cylinder 96a to raise clamp means 38a; and after conveyance of the sealed bag 12a away from the clamp means 38a;

4. retracting piston rod 92a into pneumatic cylinder 96a to lower clamp means 28a. (Referring to Figures 4 and 5).

Optionally, the time delay relay unit may additionally provide for effecting the pivoting of plate 106 to position the bag 12 so that the valve sleeve is inserted in the open clamp means prior to effecting closure of the clamp means 38. In the embodiment illustrated in Figure 3, this is accomplished by having the time delay unit additionally activate a pneumatic valve for extending and retracting piston rod 132 from pneumatic cylinder 126.

Instead of pneumatic cylinders to activate the clamping means, the positioning means and the means for raising and lowering the clamping means, it would be possible to utilize other hydraulic activating means and in some cases electrical activating means would be suitable.

Thus, in accordance with the present invention one may place on a conveyor section a filled valved bag and, without the necessity for a multiplicity of manipulations of the bag or complex apparatus, may seal the valve sleeve of the bag.

- 1 -    **0001015**

<u>CLAIMS</u>:

1.       An automatic bag sealing apparatus for sealing a valve sleeve of a filled valved bag, the interior valve sleeve surfaces of which having applied thereto a sealant, characterised in that the apparatus comprises:

        (a)   a sealing clamp means for clampingly engaging the valve sleeve to seal the interior valve sleeve surfaces;

        (b)   a means for opening and closing the clamp means;

        (c)   a conveyor means adapted to convey the bag, with the valve sleeve in a vertical position, toward and away from the clamp means;

        (d)   a bag positioning means adapted to position the bag so that the valve sleeve is inserted in the open clamp means while the bag is being conveyed toward the clamp means;

and (e)   a cycle control means which provides for stopping conveyance of the bag when the valve sleeve is inserted in the open clamp means effecting closure of the clamp means to seal the interior valve sleeve surfaces together, effecting opening of the clamp means and starting conveyance of the sealed bag away from the clamp means.

2.       An apparatus as claimed in claim 1 comprising a means for heating the clamp means to sensitize or activate a heat-sensitive or heat-activated sealant.

3.       An apparatus as claimed in claim 1 in which the clamp means comprises a static anvil having a vertical pressure face and a pressing anvil adapted to cooperate with the static anvil in clamping relation therewith.

4.          The apparatus of claim 3, wherein the anvils have attached thereto heating elements for heating the anvil to sensitize or activate a heat sensitive or heat activated sealing composition.

5.          An apparatus as claimed in claim 3 or claim 4 in which the clamp opening and closing means consists of a pressing arm fixedly mounted to the pressing anvil at one end and pivotally mounted to a pneumatic cylinder at the other end and pivotally mounted to a stationary frame member between both ends, the pneumatic cylinder mounted in such a manner that, when activated, the cylinder causes the pressing arm to open and close the pressing anvil in clamping relation with the static anvil.

6.          An apparatus as claimed in any of claims 1 to 5 comprising a means for raising the clamp means from an initial sealing position to allow for unobstructed conveyance of the sealed bag away from the clamp means; a means for lowering the clamp means to the initial sealing position after conveyance of the bag away from the clamp means; and the cycle control means additionally provides for effecting raising of the clamp means after effecting opening the clamp means and effecting lowering of the clamp means after conveyance of the sealed bag away from the clamp means and prior to stopping conveyance of another bag.

7.          An apparatus as claimed in any of claims 1 to 6 in which conveyor means is a conveyor belt.

8.          An apparatus as claimed in any of claims 1 to 7 in which bag positioning means comprises a positioning plate along each side of the conveyor means upstream of the clamp means.

9.          An apparatus as claimed in any of claims 1 to 8 in which the distance between the positioning plates is fixed at the entrance of the positioning means and

- 3 -                          0001015

adjustable at all other positions between the
entrance and exit of the positioning means.

10.          An apparatus as claimed in claim 9 in which
one plate is stationarily mounted and the other plate
is pivotally mounted at the entrance of the positioning
means.

11.          An apparatus as claimed in claim 10 in which
the cycle control means additionally provides for effecting
the pivoting of the pivotally mounted other plate to
position the bag so that the valve sleeve is inserted in
the open clamp means prior to effecting closure of the
clamp means.

12.          An apparatus as claimed in any of claims 1
to 11 in which the cycle control means comprises a
photocell control circuit adapted to detect the
presence of a bag when the valve sleeve is in the proper
clamping position in the open clamp.

FIG. I.

FIG. 2.

FIG.3.

FIG. 4.

0001015

FIG.5.

FIG.7.

FIG.6.

FIG.8.

| DOCUMENTS CONSIDERED TO BE RELEVANT | | | CLASSIFICATION OF THE APPLICATION (Int. Cl.²) |
|---|---|---|---|
| Category | Citation of document with indication, where appropriate, of relevant passages | Relevant to claim | |
| | <u>US − A − 4 003 188</u> (BLACK PRODUCTS) <br> * Column 5, lines 11-19; column 9, line 18; figures 1-6 * | 1,2,3, 4 | B 65 B 51/14 |
| | <u>CH − A − 263 448</u> (ANDERSSON) <br> * Page 1, line 42 to page 2, line 85; figures 1-3 * | 5 | |

**TECHNICAL FIELDS SEARCHED (Int.Cl.²)**

B 65 B

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 01-12-1978 | CLAEYS |

EPO Form 1503.1  06.78